# EUROPEAN PATENT SPECIFICATION

(11) **EP 1 020 278 B1**
(45) Date of publication and mention of the grant of the patent: **23.04.2003**
(21) Application number: 00100384.7
(22) Date of filing: 07.01.2000
(51) Int. Cl.: B29C 45/14

(54) **Method for manufacturing laminated rubber member and laminated rubber member produced thereby**
Verfahren zur Herstellung eines laminierten Gummielements und so hergestelltes laminiertes Gummielement
Procédé de fabrication d'un élément en caoutchouc stratifié et élément en caoutchouc stratifié ainsi fabriqué

(30) Priority: 11.01.1999 JP 435199
(43) Date of publication of application: 19.07.2000
(73) Proprietor: DAIKYO SEIKO, LTD., Tokyo (JP)
(72) Inventor: Sudo, Morihiro, c/o Daikyo Seiko, Ltd., Tokyo (JP); Togashi, Hiroshi, c/o Daikyo Seiko, Ltd., Tokyo (JP)
(74) Representative: Schaumburg, Thoenes & Thurn

(56) References cited:
- WO-A-95/24301
- FR-A- 1 538 462
- FR-A- 2 074 704
- FR-A- 2 106 567
- FR-A- 2 338 790
- FR-A- 2 459 116
- PATENT ABSTRACTS OF JAPAN vol. 12, no. 409 (M-758), 28 October 1988 (1988-10-28) -& JP 63 149122 A (DAINIPPON PRINTING CO LTD), 21 June 1988 (1988-06-21)

## Description

### BACKGROUND OF THE INVENTION

### 1. Field of the Invention

The present invention relates to a method for manufacturing a laminated rubber member, namely a rubber closure inserted in a mouth of a container, and, a piston which is inserted in a syringe, wherein the outer surface is partially coated with a synthetic resin film. The present invention also relates to a laminated rubber closure and a laminated rubler piston produced by the above method.

### 2. Description of the Related Art

This kind of laminated rubber closure or piston is conventionally formed by a press. Namely, a masticated rubber material is preformed into a flat sheet of rubber on which a synthetic resin film is applied to be used as a raw sheet material for the molding and the rubber sheet is introduced between upper and lower dies having a plurality of mold cavities whose shape corresponds to the shape of a rubber closure to be molded. The upper and lower dies are heated in advance to an appropriate temperature. The upper die is moved and pressed onto the rubber sheet to vulcanize the rubber material within the mold cavities of the upper and lower dies and mold the same in a predetermined shape. The synthetic resin film is formed while being in contact with the mold cavities of the lower die. Thus, a laminated rubber closure or a laminated rubber piston whose outer surface is coated with the synthetic resin film is obtained.

However, in the known production process of a laminated rubber member, the rubber sheet on which the synthetic resin film is applied must be preformed from a masticated rubber. It takes time to carry out the preformation and there is a possibility that foreign matter is mixed in the preformed rubber sheet during the conveyance thereof. In particular, in case of a rubber closure for use as a medical container closure in the pharmaceutical industry, the contamination by the mixture is fatal and hence extremely careful operations are needed, thus leading to an increase in the manufacturing cost.

FR-A-2 074 704 discloses a method for manufacturing a laminated rubber closure member comprising a hollow tube-like lower body portion adapted to be inserted into the mouth of a container and an upper flange portion having a larger diameter than the lower body portion. A laminated film covers the inner walls of the hollow lower body portion and extends around the lower edge thereof while leaving the outer cylindrical wall of the lower body portion uncovered. The mold for manufacturing the closure member comprises a lower die for forming the surfaces of the closure member which are to be covered by the laminate film, an intermediate die for forming the outer wall of the lower body portion and part of the flange portion and an upper die for forming the remaining part of the flange portion. The laminate film is extended between the lower die and the intermediate die and is pressed into the cavities formed in the lower die by a male mold. After closing the mold by the upper die rubber material is injected from the upper die into the mold and vulcanized with the laminate film.

### SUMMARY OF THE INVENTION

It is an object of the present invention to provide a laminated rubber closure or piston manufacturing method using-no press, in which no preformation of a rubber sheet from a masticated rubber material is necessary.

Another object of the present invention is to provide a laminated rubber closure or piston produced by the method.

According to the invention as defined in claim 1, the above-mentioned drawbacks of the prior art, and particularly the problem with the contamination caused by the mixing of foreign matter can be eliminated by replacing the press formation of a rubber material used in the conventional process with an injection molding thereof.

According to an aspect of the invention, then is provided a method for manufacturing a laminated rubber closure according to claim 1 and a method for manufacturing a laminated rubber piston according to claim 2.

According to an embodiment of the present invention, the step of extending and inserting the synthetic resin film is performed by sucking the synthetic resin film into the cavity of the lower injection molding die by a vacuum.

According to another embodiment of the present invention, the step of extending and inserting the synthetic resin film is performed by pressing the synthetic resin film to the cavity of the lower injection molding die by positive pressure.

The synthetic resin film can be made of one or more materials selected from a group of tetrafluoroethylene, ethylene-tetrafluoroethylene or super macromolecular polyethylene.

The invention also provides a laminated rubber closure and a laminated rubber piston produced by the manufacturing method mentioned above.

### BRIEF DESCRIPTION OF THE DRAWINGS

The invention will be discussed below in detail with reference to the accompanying drawings, in which
Figure 1 is a sectional view of a laminated rubber closure showing a synthetic resin film supply step in a laminated rubber closure (rubber member) manufacturing process according to the present invention;
Figure 2 is a sectional view of a laminated rubber closure showing a laminated rubber closure manufacturing process in which a synthetic resin film is extended and introduced in cavities of a lower die, according to the present invention;
Figure 3 is a sectional view of a laminated rubber closure showing an injection molding process in which an upper die and a rubber material pressing upper die, disposed on a lower die in shown in Fig. 2;
Figure 4 is a sectional view of a laminated rubber closure showing an injection molding process in a different position;
Figure 5 is a perspective view of a plurality of laminated rubber members integrally molded by injection molding;
Figure 6 is a sectional view of a laminated rubber closure produced by the manufacturing process shown in Figs. 1 through 4 and fitted in a mouth of a container;
Figure 7 is a sectional view of a laminated rubber closure showing a laminated rubber closure manufacturing process in which a synthetic resin film is extended and introduced in cavities of a lower die, according to another embodiment of the present invention;
Figure 8 is a sectional view of a laminated rubber closure showing a laminated rubber closure manufacturing process in which a synthetic resin film is extended and introduced in cavities of a lower die, according to still another embodiment of the present invention;
Figure 9 is a sectional view of another injection molding machine for making a laminated rubber closure according to the present invention; and
Figure 10 is a sectional view of molding dies to make a laminated rubber piston to be inserted in a syringe, by way of example, according to the present invention.

### DESCRIPTION OF THE PREFERRED EMBODIMENT

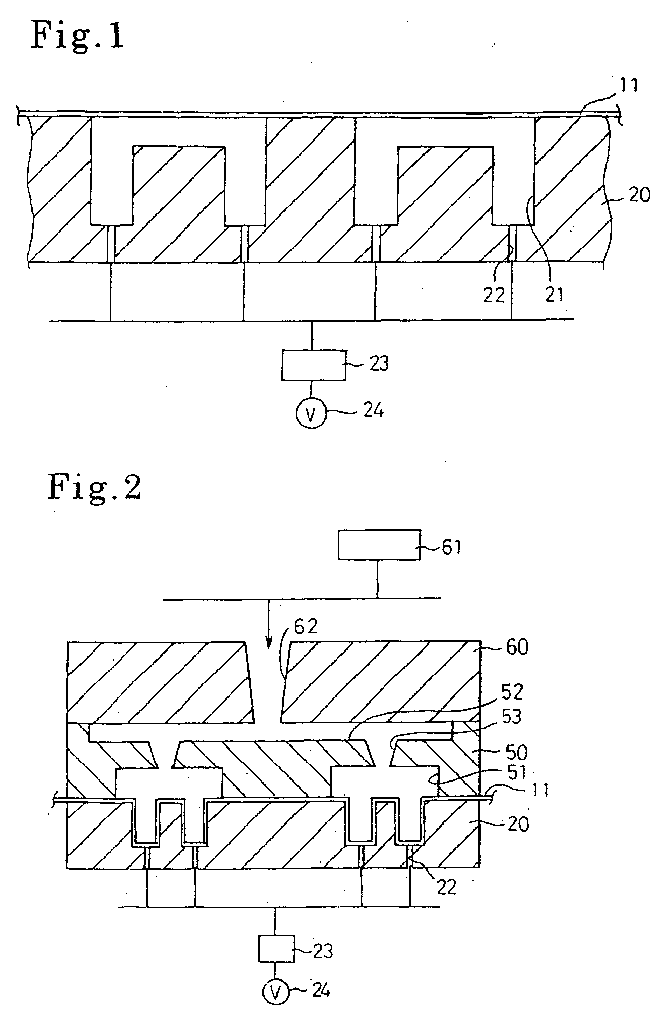

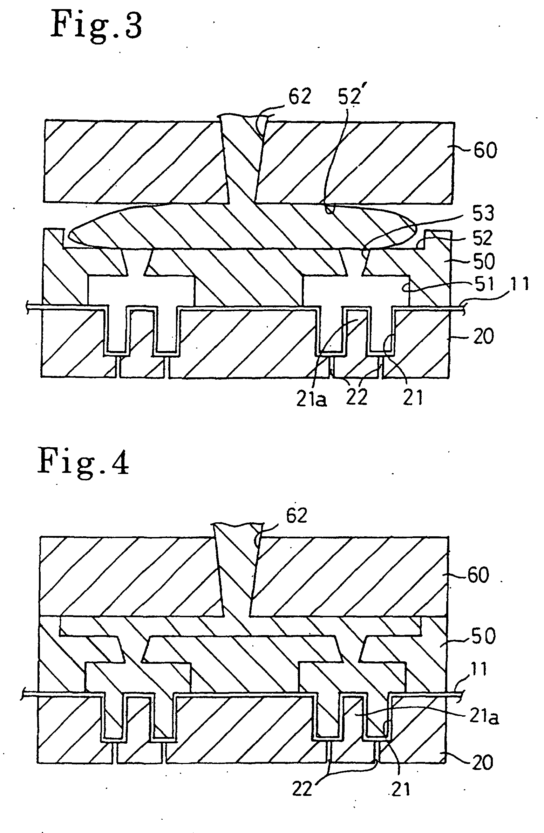

Figs. 1 through 6 show a first embodiment of the present invention, applied to the production of a laminated rubber closure. A lower die 20 for injection molding is provided with a plurality of cavities 21 for closures, which are each provided on the bottoms thereof with vacuum suction holes 22. The suction holes 22 are connected to a vacuum source 24 through a control valve 23. An upper die 50 for injection molding having cavities 51 corresponding to the cavities 21 of the lower die 20 is set on the injection lower die 20 and an upper die 60 for pressing a rubber material as a raw material is set on the injection upper die 50.

The pressing upper die 60 is movable close to or away from the injection upper die 50 and is provided with an introduction hole 62 through which a fluid-state rubber material is introduced from an injection molding machine 61. The introduction hole 62 is connected to a rubber material receiving recess 52 formed in the injection upper die 50. The rubber material receiving recess 52 is connected to each of injection holes 53 opening into the cavities 51. The injection lower die 20, the injection upper die 50 and the pressing upper die 60 constitute an injection compression molding machine, as is well known.

A synthetic resin film (laminate film) 11 is set between the injection lower die 20 and upper die 50. In this state in which the film 11 is held between the upper and lower dies 50 and 20, when air within the cavities 21 is sucked by a vacuum source 24 through the control valve 23, the flexible laminate film 11 is drawn due to suction into the cavities 21 and is extended substantially along the shape of the cavities 21 (Fig. 2).

Upon injection of the rubber material, the injection upper die 50 is correctly set on the injection lower die 20, and the pressing upper die 60 is spaced from the injection upper die 50 to define a large rubber material receiving space 52' between the rubber material pressing upper die 60 and the rubber material reserving recess 52 (or the injection upper die 50).

In this state, the rubber material in fluid state is introduced into the large rubber material receiving space 52' through the injection molding machine 61 and the introduction hole 62. Thereafter, the rubber material pressing upper die 60 is moved downward onto the injection upper die 50 to press the rubber material within the rubber material receiving space 52'; so that the rubber material is injected into the cavities 51 through the injection holes 53. The injection lower die 20, the injection upper die 50, and the pressing upper die 60 are heated to an appropriate temperature in advance. Consequently, the rubber material injected into the cavities 51 are vulcanized on and formed integral with the laminate film 11 to form a rubber closure body 12. The rubber material to be injected is selected from, for example, IIR, NBR, BR, EPDM, etc. The laminate film 11 is made of one or more resin materials of high chemical resistance, selected from a group of tetrafluoroethylene, ethylene-tetrafluoroethylene or super macromolecular polyethylene.

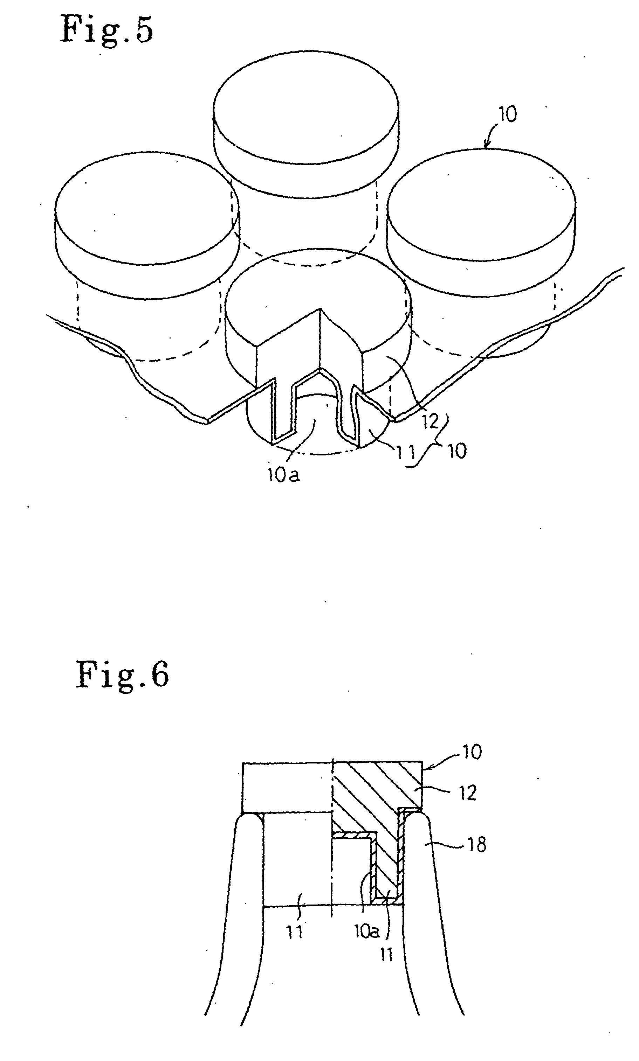

Fig. 5 shows an example of a final mold product having a plurality of laminated rubber closures 10 (each having the laminate film 11 and the rubber closure body 12), manufactured by the process mentioned above. Since the laminated rubber closures 10 are interconnected by the laminate film 11, the latter is cut to form individual laminated rubber closures 10. The laminated rubber closure 10 can be inserted in a mouth of a container 18, as shown in Fig. 6. The laminated rubber closure 10 exhibits a high chemical resistance since the laminate film 11 is entirely in contact with the inner peripheral surface of the mouth 18.

The cavity 21 of the injection lower die 20 (and accordingly the laminated rubber closure 10) in the illustrated embodiment is provided on its center portion with a projection 21a (recess 10a of the laminated rubber closure 10). Alternatively, if the closure 10 has no recess 10a, the cavity 21 has no projection 21a. The shape of the laminated rubber closure 10 is optional so long as it is provided with the laminate film 12 exposed to the outer surface thereof.

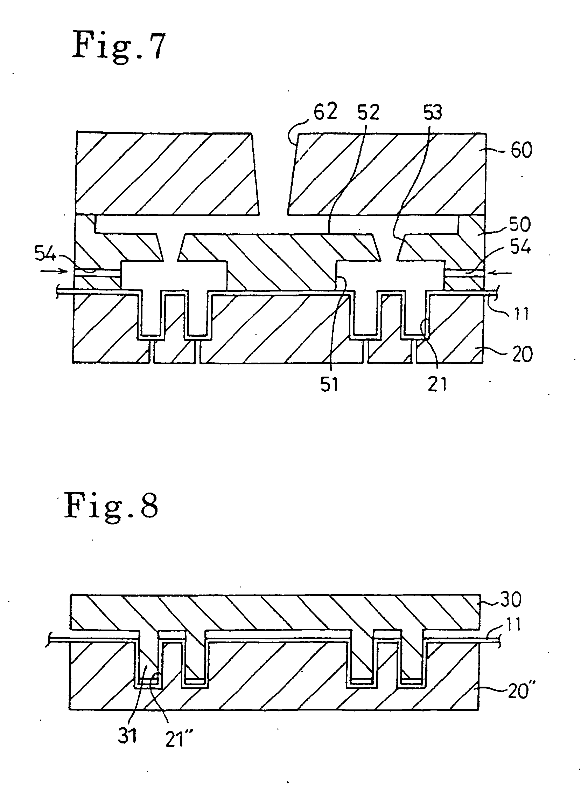

Figs. 7 and 8 show different embodiments of mold dies in which the laminate film 11 is extended and introduced into the cavities 21 of the lower die 20. In Fig. 7, the upper die 50 is provided with positive pressure passages 54 so that when the positive pressure is applied to the outer surface of the laminate film 11, the laminate film 11 is extended and deformed into and along the cavities 21. In Fig. 8, a special die 30 is used to introduce the laminate film 11 in and along the cavities 21". In the first embodiment in which the laminate film 11 is drawn into the cavities 21" due to the vacuum suction, it is possible to make the lower die 20" of a sintered metal (air permeable metal) instead of the formation of the vacuum holes 22 in the lower die 20", wherein the lower die 20" is entirely subject to vacuum on the lower side thereof. In any event, the laminate film 11 must be tensed when introduced in the cavities 21" so as not to produce wrinkles.

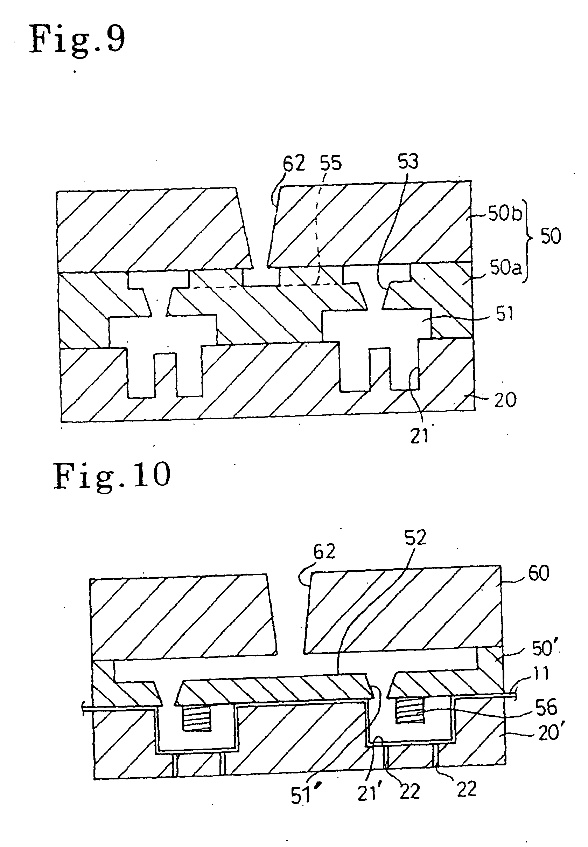

In an injection molding machine schematically shown in Figs. 1 through 4, the pressing upper die 60 is moved close to or away from the injection upper die 50. Alternatively, it is possible to mold the laminated rubber closure 10 by the use of a normal injection molding machine, as shown in Fig. 9 which shows the concept thereof. The injection molding upper die 50 includes first and second upper dies 50a and 50b which are not relatively moved. The first upper die 50a is provided with cavities 51 and injection holes 53 and the second upper die 50b is provided with an introduction hole 62. The cavities 51 and the injection holes 53 are connected to the introduction hole 62 through a connection passage 55 formed in the first upper die 50a in place of the rubber material reserving recess 52. It should be appreciated that the present invention can be applied to a normal injection molding machine like above.

Fig. 10 shows an example of molding dies used to make a laminated rubber piston to be inserted in a syringe. The injection lower die 20' is provided with a plurality of cavities 21' corresponding to pistons. An injection upper die 50' which has a plurality of introduction holes 51' corresponding to the piston cavities 21' and a rubber material pressing upper die 60 are set above the injection lower die 20'. The injection upper die 50' is provided with external threads (male screws) 56 projecting therefrom and to be inserted to the piston cavities 21', which are adapted to form internal threads (female screws) in the shaft portions of the rubber pistons, so that associated plungers can be screw-engaged in the internal threads. With this structure, the present invention can be also applied to the formation of the laminated rubber pistons. It goes without saying that the structures shown in Fig. 7 through 9 can be employed to mold the laminated rubber pistons.

As can be understood from the above discussion, according to the present invention, since no press formation or no preformation of the masticated rubber material is needed unlike the conventional manufacturing process for the laminated rubber members, not only can a fear that foreign matter is mixed be eliminated, but also the manufacturing cost can be reduced due to an absence of the preformation step of the masticated rubber material.

Obvious changes may be made in the specific embodiments of the present invention as described in the claims. It is indicated that all matter contained herein is illustrative and does not limit the scope of the claims.

## Claims

1. A method for manufacturing a laminated rubber closure (10) for the mouth of a container, comprising:
supplying a synthetic resin film (11) between the lower surface of an upper die (50) and the upper surface of a lower die (20, 20"), the lower die (20, 20") having cavities (21, 21") whose shape corresponds to the shape of the lower part of the rubber closure (10) to be molded and the upper die having cavities (51) corresponding to the cavities (21, 21") of the lower die (20, 20"), whose shape corresponds to the upper part of the rubber closure to be molded;
extending and inserting the synthetic resin film (11) in each cavity (21, 21") of the lower die (20, 20"); and
injecting a rubber material from the upper die (50) into said cavities via injection holes (53) opening into the cavities (51) of the upper dié and vulcanizing the rubber closure (10) integral with the synthetic resin film (11) located in the cavities (21, 21") of the lower die (20, 20") and held between said surfaces of the upper die (50) and the lower die (20, 20") outside said cavities, thus forming a laminated closure whose laminate film is entirely in contact with the inner peripheral surface of the mouth of the container.

2. A method for manufacturing a laminated rubber piston comprising:
supplying a synthetic resin film (11) between the lower surface of an upper die (50') and the upper surface of a lower die (20'), the lower die (20') having cavities (21') whose shape corresponds to the shape of the rubber piston (10) to be molded;
extending and inserting the synthetic resin film (11) in each cavity (21') of the lower die (20'); and
injecting a rubber material from the upper die (50') into said cavities via introduction holes (51') in the upper die (50') corresponding to the piston cavities (21') and vulcanizing the rubber piston (10) integral with the synthetic resin film (11) located in the cavities (21') of the lower die (20') and held between said surfaces of the upper die (50') and the lower die (20') outside said cavities.

3. The method according to claim 1 or 2, wherein the step of extending and inserting the synthetic resin film (11) is performed by sucking the synthetic resin film (11) into the cavity (21) of said lower injection molding die (20) by a vacuum.

4. The method according to claim 1 or 2, wherein the step of extending and inserting the synthetic resin film (11) is performed by pressing the synthetic resin film into the cavity (21) of said lower injection molding die (20) by positive pressure.

5. A method according to anyone of claims 1 to 4, wherein the synthetic resin film (11) is made of one or more materials selected from a group of tetrafluoroethylene, ethylene-tetrafluoroethylene or ultra-high molecular weight polyethylene (UHMWPE).

6. A laminated rubber closure for a mouth (18) of a container produced by the manufacturing method according to claim 1 or claim 1 in combination with any one of claims 3 to 5.

7. A laminated rubber piston produced by the manufacturing method according to claim 2 or claim 2 in combination with any one of claims 3 to 5.

## Patentansprüche

1. Verfahren zum Herstellen eines laminierten Gummiverschlußelementes (10) für die Öffnung eines Behälters, umfassend:
das Anordnen eines Kunststofffilmes (11) zwischen der Unterseite einer oberen Form (50) und der Oberseite einer unteren Form (20, 20"), wobei die untere Form (20, 20") Aushöhllungen hat, deren Form der Form des unteren Abschnittes des zu formenden Gummiverschlusselementes (10) entspricht, und die obere Form Aushöhlungen (51) hat, die mit den Aushöhlungen (21, 21") der unteren Form (20, 20") korrespondieren und deren Form dem oberen Abschnitt des zu formenden Gummiverschlusselementes entspricht;
dem Strecken und Einführen des Kunststofffilmes (11) in eine jede Aushöhlung (21, 21") der unteren Form (20, 20"); und
dem Einspritzen eines Gummimaterials von der oberen Form (50) in die genannten Aushöhlungen über Einspritzlöcher (53), die sich in die Aushöhlungen (51) der oberen Form öffnen und das Vulkanisieren des Gummiverschlusselementes (10) integral mit dem Kunststofffilm (11), der in den Aushöhlungen (21, 21") der unteren Form (20, 20") angeordnet ist und außerhalb der genannten Aushöhlungen zwischen den genannten Seiten der oberen Form (50) und der unteren Form (20, 20") gehalten ist, wodurch ein laminiertes Verschlusselement geformt wird, dessen Laminatschicht vollständig mit der inneren Umfangsfläche der Öffnung des Behältnisses in Kontakt ist.

2. Verfahren zum Herstellen des laminierten Gummikolbens, umfassend:
das Anordnen eines Kunststofffilmes (11) zwischen der unteren Seite einer oberen Form (50') und der oberen Seite einer unteren Form (20'), wobei die untere Form (20') Aushöhlungen (21') hat, deren Form mit der Form des zu formenden Gummikolbens (10) übereinstimmt;
das Strecken und Einführen des Kunststofffilmes (11) in eine jede Aushöhlung (21') der unteren Form (20'); und das Einspritzen von Gummimaterial von der oberen Form (50') in die genannten Aushöhlungen über Einführlöcher (51') in der oberen Form (50'), die mit den Kolbenaushöhlungen (21') korrespondieren und dem Vulkanisieren des Gummikolbens (10) integral mit dem Kunststofffilm (11), der in den Aushöhlungen (21') der unteren Form (20') angeordnet ist und außerhalb der genannten Aushöhlungen zwischen den genannten Seiten der oberen Form (50') und der unteren Form (20') gehalten ist.

3. Verfahren nach Anspruch 1 oder 2, bei dem der Schritt des Streckens und Einführens des Kunststofffilmes (11) dadurch durchgeführt wird, dass der Kunstharzfilm (11) mittels eines Vakuums in die Aushöhlung (21) der genannten unteren Spritzgussform (20) gesaugt wird.

4. Verfahren nach Anspruch 1 oder 2, bei dem der Schritt des Streckens und Einführens des Kunststofffilmes (11) dadurch durchgeführt wird, dass der Kunststofffilm mit Hilfe von Überdruck in die Aushöhlung (21) der genannten unteren Spritzgussform (20) gedrückt wird.

5. Verfahren nach einem der Ansprüche 1 bis 4, bei dem der Kunststofffilm (11) aus einem oder mehreren der Materialien Tetrafluorethylen, Ethylen-Tetrafluorethylen oder Polyethylen von ultrahohem Molekulargewicht (UHMWPE) ausgewählt wird.

6. Laminiertes Gummiverschlusselement für eine Öffnung (18) eines Behälters, der nach dem Herstellungsverfahren gemäß Anspruch 1 oder Anspruch 1 in Kombination mit einem der Ansprüche 3 bis 5 herstellt ist.

7. Laminierter Gummikolben, der in dem Herstellungsverfahren gemäß Anspruch 2 oder Anspruch 2 in Kombination mit einem der Ansprüche 3 bis 5 hergestellt ist.

## Revendications

1. Procédé de fabrication d'un élément de fermeture en caoutchouc stratifié (10) destinée à l'ouverture d'un récipient, comprenant :
la disposition d'un film de résine synthétique (11) entre la surface inférieure d'une matrice supérieure (50) et la surface supérieure d'une matrice inférieure (20,20"), la matrice inférieure (20,20") comportant des cavités (21, 21") dont la forme correspond à la forme de la partie inférieure de l'élément de fermeture en caoutchouc (10) devant être moulé, et la matrice supérieure comportant des cavités (51) correspondant aux cavités (21, 21") de la matrice inférieure (20,20"), dont la forme correspond à la partie supérieure de l'élément de fermeture en caoutchouc devant être moulé,
l'extension et l'insertion du film de résiné synthétique (11) dans chaque cavité (21, 21") de la matrice inférieure (20,20"), et
l'injection d'un matériau de caoutchouc depuis la matrice supérieure (50) dans lesdites cavités par l'intermédiaire de trous d'injection (53) débouchant dans les cavités (51) de la matrice supérieure, et la vulcanisation de l'élément de fermeture en caoutchouc (10) de façon intégrée avec le film de résine synthétique (11) situé dans les cavités (21, 21") de la matrice inférieure (20,20") et maintenu entre lesdites surfaces de la matrice supérieure (50) et de la matrice inférieure (20,20") à l'extérieur desdites cavités, en formant ainsi un élément de fermeture stratifié dont le film stratifié est entièrement en contact avec la surface périphérique intérieure de l'embouchure du récipient.

2. Procédé de fabrication d'un piston en caoutchouc stratifié comprenant :
la disposition d'un film de résine synthétique (11) entre la surface inférieure d'une matrice supérieure (50') et la surface supérieure d'une matrice inférieure (20'), la matrice inférieure (20') comportant des cavités (21') dont la forme correspond à la forme du piston en caoutchouc (10) devant être' moulé,
l'extension et l'insertion du film de résine synthétique (11) dans chaque cavité (21') de la matrice inférieure (20'), et
l'injection d'un matériau de caoutchouc depuis la matrice supérieure (50') dans lesdites cavités par l'intermédiaire de trous d'introduction (51') dans la matrice supérieure (50') correspondant aux cavités du piston (21'), et la vulcanisation du piston en caoutchouc (10) de façon intégrée avec le film de résine synthétique (11) situé dans les cavités (21') de la matrice inférieure (20') et maintenu entre lesdites surfaces de la matrice supérieure (50') et de la matrice inférieure (20') à l'extérieur desdites cavités.

3. Procédé selon la revendication 1 ou 2, dans lequel l'étape d'extension et d'insertion du film de résine synthétique (11) est exécutée en aspirant le film de résine synthétique (11) dans la cavité (21) de ladite matrice inférieure de moulage par injection (20) grâce à un vide.

4. Procédé selon la revendication 1 ou 2, dans lequel l'étape d'extension et d'insertion du film de résine synthétique (11) est exécutée en pressant le film de résine synthétique dans la cavité (21) de ladite matrice inférieure de moulage par injection (20) grâce à une pression positive.

5. Procédé selon l'une quelconque des revendications 1 ou 4, dans lequel le film de résine synthétique (11) est fait d'un ou plusieurs matériaux choisis à partir d'un groupe constitué d'un tétrafluoro-éthylène, un éthylène-tétrafluoro-éthylène ou d'un polyéthylène à masse moléculaire très élevée (UHMWPE).

6. Elément de fermeture en caoutchouc stratifié destiné à une embouchure (18) d'un récipient, réalisé par le procédé de fabrication selon la revendication 1, ou selon la revendication 1 en combinaison avec l'une quelconque des revendications 3 à 5.

7. Piston en caoutchouc stratifié réalisé par le procédé de fabrication selon la revendication 2, ou selon la revendication 2 en combinaison avec l'une quelconque des revendications 3 à 5.
